# EUROPEAN PATENT SPECIFICATION

(11) **EP 1 859 979 B1**
(45) Date of publication and mention of the grant of the patent: **03.06.2009**
(21) Application number: 06381022.0
(22) Date of filing: 23.05.2006
(51) Int. Cl.: B60J 7/00, B60J 7/057

(54) **Shading device for vehicle roofs**
Beschattungsvorrichtung für ein Fahrzeugdach
Dispositif d'ombrage pout toit de véhicule

(43) Date of publication of application: 28.11.2007
(73) Proprietor: GRUPO ANTOLIN-INGENIERIA, S.A., 09007 Burgos (ES)
(72) Inventor: Martinez Moral, Franciso Javier, 09002 Burgos (ES); Iglesias Sedano, Ricardo, 09002 Burgos (ES); Marcos Gonzalez, Cesar, 09002 Burgos (ES)
(74) Representative: Capitan Garcia, Maria Nuria

(56) References cited:
- EP-A- 1 367 207
- EP-A2- 1 258 378
- DE-A1- 10 123 422

## Description

### OBJECT OF THE INVENTION

The object of this invention is a shading device for vehicle roofs which has a built-in aperture usually covered by a transparent element which must be covered against the entry of light.

This shading device makes use of a curtain as shading element with traction by means of cable. The structural optimization and the major reduction of the structural requirements by the absence of stresses due to the reset permit it to be directly installed in the roof trim thus constituting a module.

In this way, it prevents its installation directly to the vehicle body plate plus the subsequent attachment of the trim module.

This device configured as a trim module which incorporates the shading element in an integrated way is equipped with a minimum resistant structure since the main core of this invention consists in built-in stop devices in the cable winding drum which hinder the presence of major stresses during the reset. Stresses, which if present, can cause more important structural requirements than required in a shading element such as the one proposed here.

The object of this invention involves different technical solutions destined to establish a displacement stop in the end-stop both in the winding and the unwinding of the cable although in this case, the objective is not so much to prevent stresses but an excessive cable extension.

### BACKGROUND OF THE INVENTION

The usual procedures for the installation of shading devices to cover the entry of light or solar rays by means of an aperture usually covered by a transparent element present in the roof are to carry out the attachment of the shading element to the roof plate.

The roof plate has greater rigidity than the interior trim of the roof thus the commonly used technical solution consists in defining a carrier structure of the different components of the shading element destined to be directly attached in the plate.

This type of attachments must possess their own parts as well as the logistical means which permit the supply of the work post dedicated to their installation. After the incorporation of these attachment devices is when one proceeds to the installation of the shading device in the vehicle roof and the trim.

It recognizes the document EP 1724157 A1 which describes a roof trim module which incorporates the shading elements without requiring its prior attachment to the roof.

The specific solution described herein makes use of a double shading element with guides and traction by means of push-pull cable. The reinforcement structure has been adapted to the configuration of the trim to which it is connected, for example by means of adhesive. The edges of the windows carried out on the trim are parts which have also been reinforced.

This strategy reduces the manufacture costs in a very significant way since there are fewer parts; there is no prior installation of attachment devices instead there is solely its own support together with the logistical operations associated to its mounting. This patent is equipped with a reinforcement structure on the trim which allows this trim to absorb the stresses required both during its normal functioning as well as in the reset operation.

To clarify, the reset operation is denominated as conveying the shading element to its two end positions: total unwinding of the shading element and total winding of the shading element. The object of the reset is to make sure that the motor "learns" what the extension of the route is and assures that in its normal functioning, it is performed in the admissible winding and unwinding ranges without the need to reach the stops of the end-stop.

This operation is carried out at the time of the installation and occasionally in other operations such as repairs that require the removal and reinstallation of the shading element, change of battery, etc.

In this reset operation, it is possible that the displacement is such that they reach the stops of the end-stops, because the front rod of the traction element has reached the front stop after the extension of the shading element or because it has reached the rear stop after the collection of this shading element. In this second case, the stresses on the support are lower than in the first case since only the stresses of the spring of the unwinding recovery intervene.

The blow of the end-stop causes for example the supports of the cable redirectors, when they are used as the case of the patents with publication number EP1375221or EP 1258378 B1, and the different elements that intervene in the device to undergo the stresses of the traction either from the motor in the winding of the cable, the most important ones, or the recovery spring of the winding drum of the shading element. These stresses are much higher than those of normal functioning thus if the structure must be designed to support the reset, that remains oversized in relation to the normal functioning.

These stresses, as mentioned above, are high and if the resistant structure is not capable of supporting them, it will be damaged and produce bends or breakages.

This invention is founded on a strategy based on the use of limitation devices in the end-stops which only produce internal stresses and in the geared motor set together with the cable winding drum in such a way that these stresses are not transmitted to the support of the shading element.

This strategy makes it possible to reduce the resistant structure by facilitating the integration in the trim as well as complying more easily with the severe space restrictions that are imposed by the inhabitancy inside the vehicle.

### DESCRIPTION OF THE INVENTION

This invention consists in a shading device for vehicle roofs in which there are means which, in the reset operation, hinder the stresses that are obtained upon reaching either of the end-stops from affecting the carrier structure of the shading element.

In reality, the invention is useful for the reset in a motor when it is available in electronic mode as well when end positions of the shading element are reached when the motor does not possess an electronic mode. Although the major part of the description shall emphasize the case of reset, the invention is equally valid to halt the shading element in its end positions and driven with a motor without electronic mode which would be in charge of carrying out the halt in these end positions.

In the examples, the trim shall always be used as the carrier element of the shading element since in this way, the installation of the shading device on this trim forms a single module. Nevertheless, the essence of the invention solely involves the shading device, although the highly interesting implementation mode is precisely constituted by the trim module which incorporates this shading device thus preventing its separate installation in the vehicle roof.

Depending on the specific solution which is available, these stresses can be greater in the stops in the extension operation of the shading element or in the stops in the collection operation of the shading element.

In the latter case, the collection of the shading element involves the total unwinding of the cable. In addition to preventing the presence of overstrains in the structure by reaching the stops, the invention also solves the situation where the drum can continue unwinding once it has reached its maximum extension. Definitively, by unwinding the cable, it also solves the potential problem if the motor fails to stop and halts the unwinding of the entire cable so that it then winds it again in the opposite direction with the consequent breakage of the system.

In the implementation examples of this invention, they shall use a cable as the means to carry out the traction of the shading element since it is simple and facilitates its use in very small spaces.

If the invention precisely reduces the resistance requirements of the carrier structure, the use of cables is one of the best candidates to follow the strategy proposed in this invention.

In this case, the extension operation of the shading element coincides with the cable collection in its drum; and the collection operation of the shading element coincides with the unwinding of the cable from its drum. The drum has also been solidified to the axis which exits the geared motor and with a protection casing configures a single resistant block.

The strategy of placing the stop devices in the geared motor drum assures that the stresses generated in the reset are not transmitted to the carrier element, the trim in the examples, and thus it does not require excess reinforcement which increases the price and the weight.

It is possible that the invention solely adopts these advance limitation devices in a single direction if the particular mode to carry out the winding is not required in the other.

In order to execute the invention, it shall incorporate a limitation device for the extension of the unwound cable by making use of a pin placed inside the cable winding drum. This pin is internally driven by a spring which tends to permanently remove it. Faced with this tendency, the cable winding, given that the pin has its exit in a point of the winding surface, pressures the pin maintaining it in its internal position and not allowing it to exit. When the cable is unwound, it ceases to imprison the pin and it then exits.

Once the pin has exited, the rotation of the drum shall be limited by its support, that of the pin, in an aperture of the casing. The support hinders the drum from continuing to rotate and the cable from exiting. In this way, the support stresses which the casing undergoes are equal to the forces of the reaction undergone in the pin, balancing these stresses in the same body in such a way so that the drum-casing set is capable of absorbing the strains derived from these stresses, which are not transmitted to the support of this set, which means, to the carrier element such as the trim.

This same strategy is applied in the winding operation. Two examples shall be described which make it possible to limit the cable winding, on by means of a ball solidified to the cable which makes a stop when reaching the casing during the cable entry, and the other reduces the size of the groove that admits the cable in such a way that it projects it against the casing exercising a braking action. An additional example integrates the stop solution in both directions of the displacement.

In both cases, the stresses which appear in this movement limitation of the advance solely involve parts which belong to the set comprised by the geared motor, the winding drum, and the casing so that the action and reaction forces do not take place outside of this set and must be supported by the support which could be the trim.

By preventing these overstrains in the reset operation also above the nominal stresses that appear in the normal functioning, the sizing of the structure attached to the trim and the reinforcements are substantially less than those that would be required if use was not made of the technical solution such as that proposed in this invention.

### DESCRIPTION OF THE DRAWINGS

This descriptive report is complemented with a set of plans which illustrate and never limit the preferential example of the invention.
Figure 1 and 2 are a view from the trim perspective which incorporates the shading device viewed from above. Figure 1 shows the shading element when it is collected and figure 2 when it is extended.
Figure 3 is a detail of the shading element in its front section where the geared motor is located with the cable winding drum and where the end-stop limitation solutions object of this invention are located. The lower section of the figure shows four details which correspond to the end points where it is most likely that the stresses derived from use or in the reset shall appear.
Figure 4 is an expanded perspective of the geared motor with the winding drum incorporating a primary solution as an example to prevent the excessive exit of the cable.
Figure 5 is a detail of how this same solution functions in the interior of the winding drum.
Figure 6 is an example of the implementation of the invention which makes it possible to limit and halt the winding of the cable by modifying the drum design.

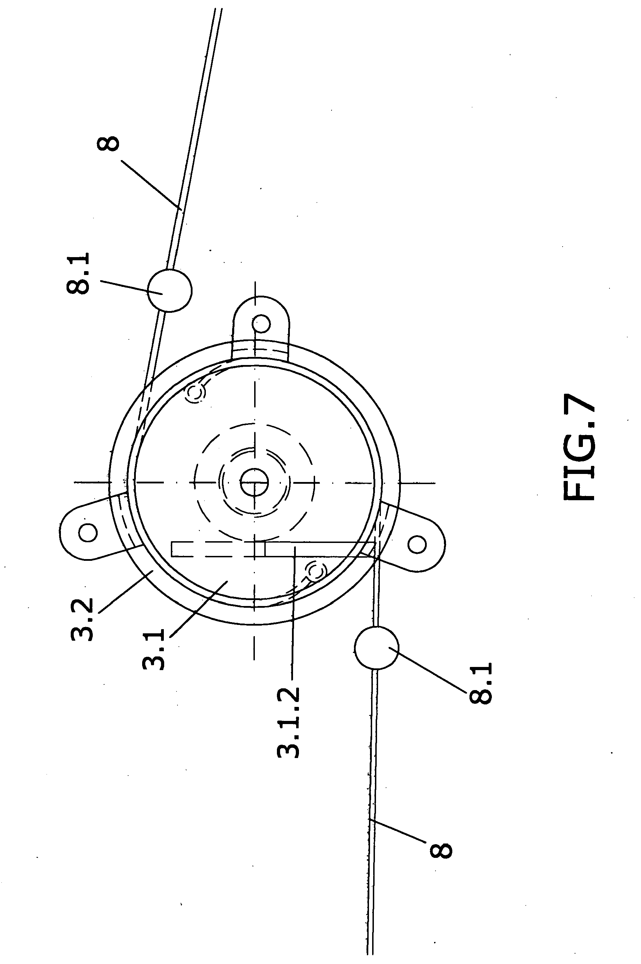

Figure 7 is another example of the implementation of the invention also destined to halt and limit the winding of the cable by using external stops.
Figures 8a and 8b represent an implementation mode of the invention in which a limitation is obtained in the drum-casing set both in the extension as well as in the collection of the cable.

### IMPLEMENTATION EXAMPLES OF THE INVENTION

The essential objective, verifying that expressed in the section dedicated to the description of the invention, is to establish an end-stop limit in the exit and entry of the cable which hinders that in operations such as the reset in which these limits are reached, stresses are produced which reach the carrier element of the shading element which shall be the trim in all examples.

With the support of the figures, several implementation examples shall be described which make it possible to achieve the indicated objective.

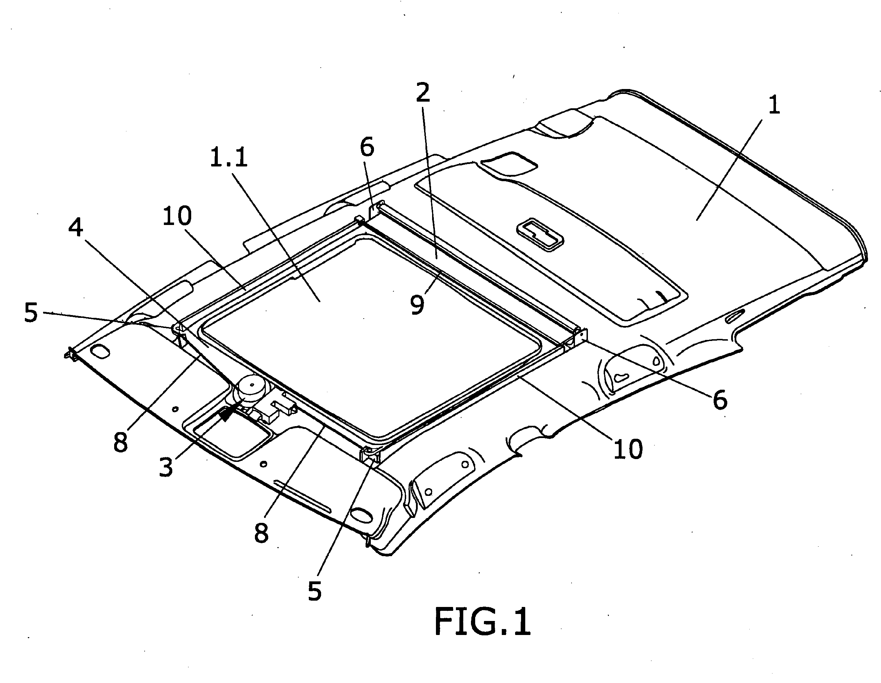

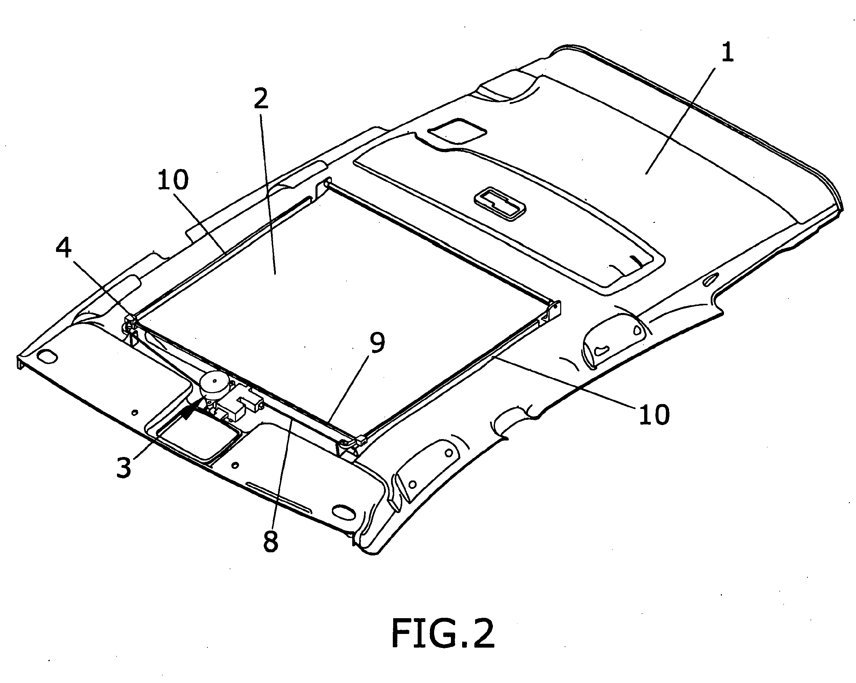

Figure 1 and figure 2 represent trim (1) in which there is a window (1.1) which permits the entry of light and sunshine which pass through the transparent element of the roof, not represented in the figures. This window (1.1) is covered by a shading element which consists in a curtain primarily constituted by a sheet(2).

It intends to make use of the trim (1) not only as the carrier element but also as a suitably reinforced structural element. With this objective, the trim (1) is placed surrounding the window (1.1) with a resistant frame (4) which incorporates the elements subjected to stress such as the redirectors (5)and the supports (6) of the drum (7).

In figure 1, the shading element is collected with the sheet (2) completely wound in its drum (7).

The shading element uses a cable (8) to drive the extension by pulling the front rod (9). This front rod (9) pulls the sheet (2) of the shading element in a uniform way which is displaced so that its ends slide by lateral guides (10).

The sheet (2) of the shading element is extended starting from its winding drum (7) which is equipped with a spring that always maintains the tendency to wind and collect this sheet (2).

The traction cable (8) consists of two branches, independent or not, one on each side. This cable (8) is pulled by means of the geared motor (3) which is equipped with an internal winding drum (3.1) covered by a casing (3.2).

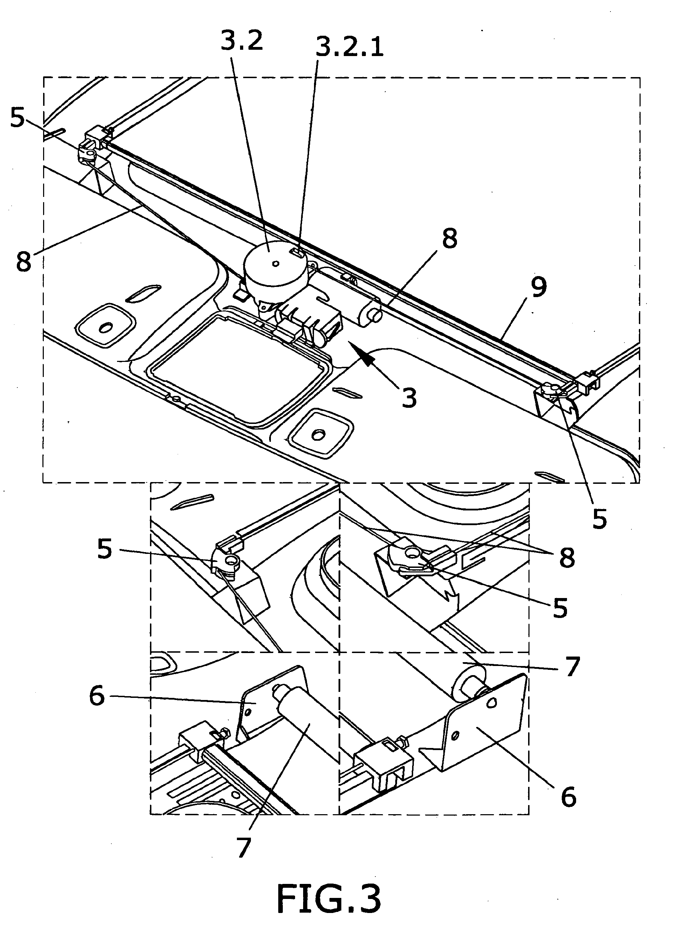

Figure 3 shows the layout of the geared motor (3) in the front part of the trim (1) where it is possible to distinguish the casing (3.2) which covers the internal winding drum (3.1) of the cable (8). Starting from this internal drum (3.1), two branches of cable (8) exit, one on each side, to drive the ends of the rod (9) which drag the sheet (2) of the shading element.

The geared motor (3) has a reinforced base to absorb the stresses derived from the traction of the cables (8) as well as others derived from the inertia forces. Nevertheless, other zones that require reinforcement such as the support frame (4) of the redirectors (5) and other structural elements which connect them shall be seen as reduced in size and in weight due to the fact that the maximum values of the traction to which they shall be subjected do not include stresses such as those derived from the reset operation.

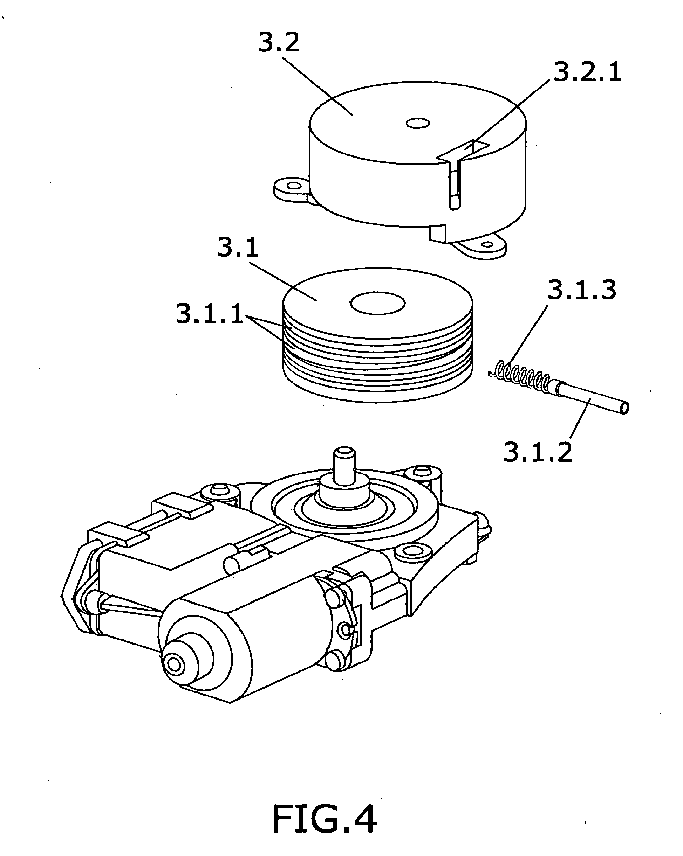

To achieve a symmetrical functioning mode in each branch of the cable (8), as shown in the expanded perspective of figure 4, the internal drum (3.1) has in its periphery two sets of symmetrical helicoidal grooves (3.1.1) so that the branch of the cable (8) which is wound in the upper groove (3.1.1) and the branch of the cable (8) which is wound in the lower groove (3.1.1) are performed at the same time and in the same rotation direction. In this way, when rotating the drum (3.1) either the two branches of cable (8) are wound or the two branches of cable (8) are unwound, thus displacing the front rod (9) in a coordinated way in their ends.

### Example of the first solution

In this solution example, it contains a way to assure that the winding drum (3.1) of the cable (8) is limited at the end of the unwinding route, which means, during the collection of the sheet (2) of the shading element.

In the winding operation, the cable (8) shall exit from the internal drum (3.1) by means of a window (3.2.1) of the casing (3.2).

A pin (3.1.2) shall hinder the rotation of the drum (3.1) so that it continues supplying the cable (8).

This pin (3.1.2) is housed in the interior of the drum (3.1) in a longitudinal cavity (3.1.4) which imposes a single movement option: according to the longitudinal axis of the pin (3.1.2).

The cavity (3.1.4) in which the pin (3.1.2) is housed emerges in a point of the helicoidal groove (3.1.1) which assures the correct winding of the cable (8) which approximately corresponds to the time when the cable (8) which leaves the groove is near to the end-stop that we want to define.

The pin (3.1.2) is pressured in a permanent way by the internal spring (3.1.3) which tends to make the pin (3.1.2) exit from its cavity. The wound cable (8) pressures the pin (3.1.2) keeping it inside the cavity (3.1.4) until it reaches the point in which the cable (8) abandons the groove and releases the pin (3.1.2). It has been mentioned above that the cavity emerges in a point of the groove (3.1.1) with a helicoidal configuration approximately near to where the end-stop corresponds because once the pin (3.1.2) is released, this pin (3.1.2) does not make a stop until it has reached the exit window (3.2.1) of the cable (8).

Consequently, once the pin (3.1.2) is released because it is no longer pressured by the cable (8), the drum (3.1) continues rotating with the pin (3.1.2) making direct contact in the interior surface of the casing (3.2) until it reaches the exit window (3.2.1) of the cable (8) where it makes a stop in one internal side (3.2.1.1) and cannot advance any further. This stop is the one that limits the exit of the cable (8) establishing a stress which does not propagate beyond the geared motor set (3), drum (3.1), and casing (3.2).

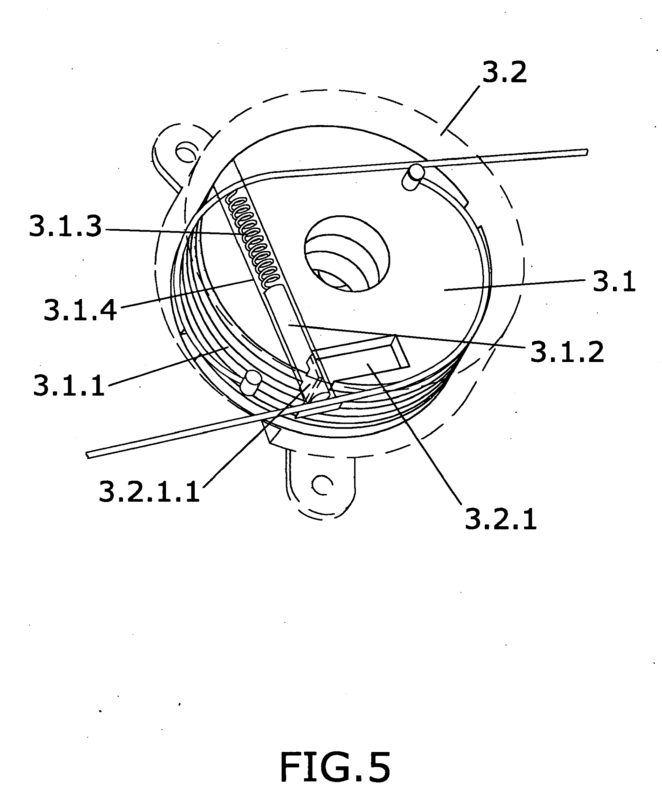

The internal side (3.2.1.1) of the window (3.2.1) of the casing (3.2) where the pin (3.1.2) makes its stop has been represented in figure 5 in a dotted line, where this reference must not be interpreted as an additional part. This side (3.2.1.1) has been shown in the graphic representation for clarity reasons thus indicating where the mechanical interference occurs which hinders the drum (3.1) from continuing to rotate.

In figure 5, also observe the layout of the pin (3.1.2) in relation to the drum (3.1) where it is housed is not radial but shows a position of its axis separated from the rotation axis of the drum (3.1). This change of direction facilitates the recovery of its retracted position when the rotation direction of the winding drum (3.1) is changed since the retraction force that the interior surface of the casing (3.2)exercises has an action component placed in a way that attempts to prevent jamming. As a result, the force required in this layout of the pin (3.1.2) for its retraction is less giving rise to a smoother behaviour and with a lower requirement in relation to the pair motor.

Although this solution could be applied to the two sections of cable (8), in the majority of the applications it is sufficient with one that hinders the rotation beyond where it has been predetermined in the design.

### Example of the second solution

The second implementation example is designed to establish a limitation in the rotation of the drum (3.1) that acts in the opposite direction than the first example. The second example shall establish a limitation mechanism for the rotation of the drum (3.1) at the end of the winding.

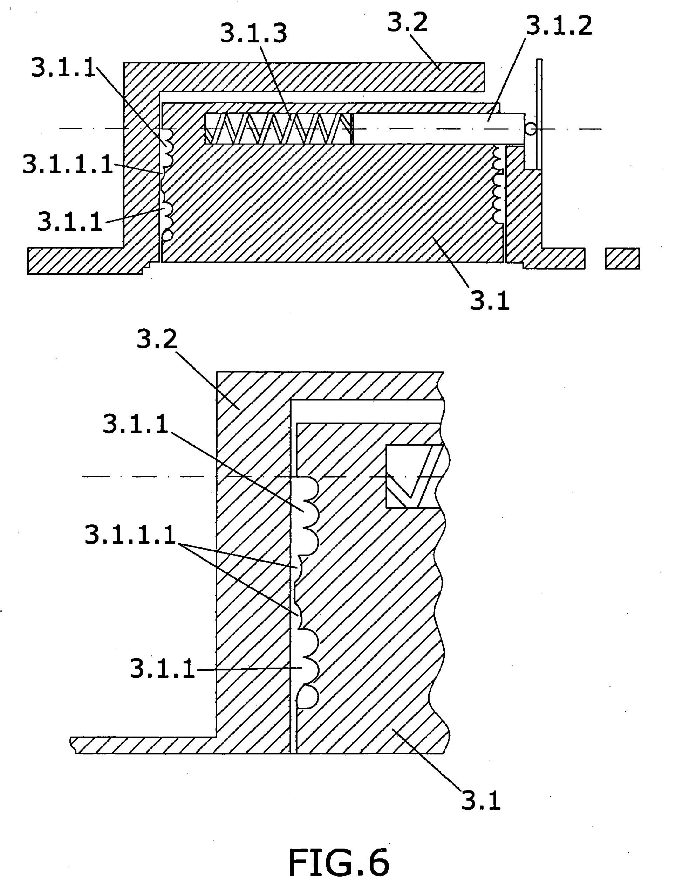

Figure 6 shows a section of the drum (3.1) which coincides with the cavity that houses the pin (3.1.2) and the spring (3.1.3) used in the first example plus a detail of the last section (3.1.1.1) of the groove (3.1.1) .

This detail shows the depth reduction of the groove (3.1 .1) in such a way that it projects the cable (8) outwards which is supported on it. This exterior projection means that the cable (8) remains imprisoned against the interior surface of the casing (3.2).

This imprisonment of the cable (8) shall only occur at the end of the winding, after having completed all the turns of the groove (3.1.1) arriving to its final section (3.1.1.1). In this point, the imprisonment hinders the drum (3.1) from continuing to turn establishing a stop that impedes reaching the end-stop in the extension operation of the shading device.

### Example of the third solution

The third example is a solution that resolves the limitation imposed in the second example in another way, by the extension limit of the shading device.

This example uses a retention device which acts from the exterior of the casing (3.2).

In this case, the cable (8) is equipped with a retainer (8.1), which in this implementation example has been designed in the form of a ball, verifying that its size is greater than the window (3.2.1) of the casing (3.2) for the entry of the cable (8) in the internal drum (3.1) where it is wound.

During the entry of the cable (8), it shall be wound in the drum (3.1) and the retainer (8.1) approaches until the time in which it makes a stop in the window (3.2.1) of the entry since it is not able to surpass it. This obstacle establishes the limitation for the rotation of the winding drum (3.1). Although the retainer (8.1) is externally located, the strain of the cable (8) is produced from the retainer element (8.1) towards the interior of the geared motor (3) and the stresses do not exit from this set, objective of the invention.

Equivalent to that mentioned in the previous example, although two balls have been represented as the retainer element (8.1), one is sufficient to achieve the retention.

### Example of the fourth solution

The fourth example to carry out the limitation as an end-stop mode in the extension and collection operation of the shading element so that the generated stresses remain circumscribed to the geared motor set which has the particular feature of integrating a limitation in both directions in the same solution.

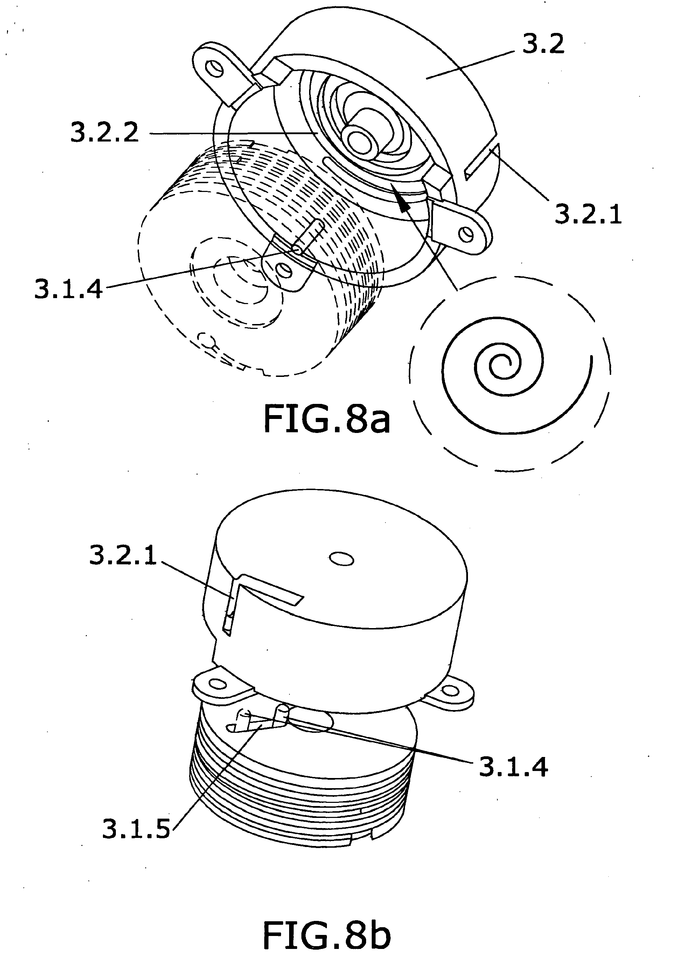

Figures 8a and 8b only show the internal drum (3.1) where the two branches of the cable (8) are wound and the casing (3.2).

In its interior side, the casing (3.2) has a canal (3.2.2) or non-bushing slot in the form of a spiral with the ends near to the axis and the external perimeter surface respectively.

On the other hand, in the internal drum (3.1) there is a pin (3.1.4) in the side which faces the internal side of the casing (3.2) where the canal (3.2.2) is located. This pin (3.1.4) is different from that used in the first example, hence a numerical reference has been used here with a different identification.

The pin (3.1.4) is partially housed in a non-bushing slot (3.1.5) placed in the internal drum (3.1) and the essentially radial guide.

The pin (3.1.4) is partially housed because it emerges in a section which is destined to be housed, once the casing (3.2) has been coupled in its operative position in the spiral canal (3.2.2).

In this functional position, in which the pin (3.1.4) is simultaneously partially inserted in the slot (3.1.5) and the canal (3.2.2), it is necessary to consider the relative movement between each one of the parts.

The relative rotation between the internal drum (3.1) and the casing (3.2) causes the insertion location of the spiral pin (3.1.4) is radially displaced in relation to the drum (3.1). This radial displacement has two end limits, the one near the rotation axis and the exterior end. This end limit which the pin (3.1.4) reaches in its displacement can be produced either in the spiral canal (3.2.2) or in the slot (3.1.5) of the drum (3.1), although the spiral stop is preferred.

In the disassembled detail of the spiral, observe that the guide is variable passage. The variable passage makes it possible to adjust for example the support mode in the ends when they make a stop between other stresses; nevertheless a simpler scheme is equally possible based on a constant passage spiral.

In either of the two cases, the relative movement between the drum (3.1) and the casing (3.2) is found to be impeded simultaneously establishing the two limits or end-stops: one in the extension and the other in the collection of the shading element.

In the description of the different components of the implementation examples, a single shading element has been used, nevertheless, the application of the invention's essence is possible in configurations of the shading device where two or more curtains are used which are moved at the same time or in an independent way.

## Claims

1. A shading device for vehicle roofs which comprises a sheet element (2) destined to cover a surface that essentially coincides with a window (1.1) of the roof covered or not covered by a transparent element by itself or in combination with others, extendable from a winding drum (7) which provides a tendency for collection, where it is extendable by traction by means of cable (8), acting on a rigid front rod (9) laterally guided and driven by a geared motor set (3) which incorporates an internal winding drum (3.1) of cable (8) covered by a casing (3.2), **characterized in that** the geared motor set (3) is equipped with limitation devices with mechanical interference for the advance in at least one end-stop, at the end of the extension of the sheet element (2) and / or at the end of the collection of the sheet element (2) whereby once this limitation has been reached, the stresses generated in this limitation do not take place outside the geared motor set (3).

2. Shading device for vehicle roofs according to claim 1 **characterized** because the limitation of the end-stop is established after the collection of the sheet element (2) and corresponding exit of the cable (8).

3. Shading device for vehicle roofs according to claim 2 **characterized** because the limitation of the end-stop is obtained by the mechanical interference that is caused by the exit of a pin (3.1.2) from the internal winding drum (3.1) which is released at the end of the exit of the cable (8) against the casing (3.2).

4. Shading device for vehicle roofs according to claim 3 **characterized** because the pin (3.1.2) is housed in a cavity of the internal winding drum (3.1) of the cable (8).

5. Shading device for vehicle roofs according to claim 4 **characterized** because the cavity is placed in a slanted position in relation to the radial position of the internal drum (3.1).

6. Shading device for vehicle roofs according to claim 3 **characterized** because the pin (3.1.2) is equipped with an internal spring (3.1.3)which possesses the permanent tendency to exit from its housing.

7. Shading device for vehicle roofs according to claim 3 **characterized** because the mechanical interference of the pin (3.1.2) with the cavity (3.2) is produced in the exit window (3.2.1) of the cable (8).

8. Shading device for vehicle roofs according to claim 1 **characterized** because the limitation of the end-stop is established after the extension of the sheet element (2) and corresponding collection of the cable (8).

9. Shading device for vehicle roofs according to claim 8 **characterized** because the limitation of the end-stop is obtained by reducing the depth of the winding groove (3.1.1) of the cable (8) in the final stage to obtain the projection of the cable (8) against the casing (3.2) and its imprisonment to obtain a braking effect.

10. Shading device for vehicle roofs according to claim 8 **characterized** because the limitation of the end-stop is obtained by the addition of a retainer (8.1) in the entry cable (8) to obtain the mechanical interference with the window (3.1.2) which hinders it from entering due to its smaller dimensions and thus obtains the braking of the internal drum (3.1).

11. Shading device for vehicle roofs according to claim 10 **characterized** because the retainer element (8.1) is a ball.

12. Shading device for vehicle roofs according to claim 10 **characterized** because the redirectors (5) and elements through which the retainer (8.1) passes have been adapted to permit its passage.

13. Shading device for vehicle roofs according to claim 1 **characterized** because the limitation of the end-stop is established in the two directions of the advance: Both in the extension of the shading element as well as in its collection.

14. Shading device for vehicle roofs according to claim 13 **characterized** because the casing (3.2) is equipped with an internal spiral canal (3.2.2) and the internal drum (3.1) with a slot (3.1.5) in an essentially radial layout so that a pin (3.1.4) is found partially housed simultaneously in the canal (3.2.2) and in the slot (3.1.5) so that the relative movement of the rotation between the drum (3.1) and the casing (3.2) displaces the pin (3.1.4) at the end of route or the canal (3.2.2) or the slot (3.1.4) establishing a limit to the advance.

15. Shading device for vehicle roofs according to claim 14 **characterized** because the internal spiral canal (3.2.2) is with constant passage.

16. Shading device for vehicle roofs according to claim 14 **characterized** because the internal spiral canal (3.2.2) is with variable passage.

17. Shading device for vehicle roofs according to claim 1 **characterized** because the window (1.1) is covered by means of a single curtain.

18. Shading device for vehicle roofs according to claim 1 **characterized** because the window (1.1) is covered by means of two or more curtains moved at the same time or in an independent way.

19. Roof trim module constituted by the trim (1) which incorporates a shading device with limitation devices for the advance based on any of the above claims so that the shading element is found directly attached to the trim (1).

## Patentansprüche

1. Schattierungseinrichtung für Fahrzeugdächer, die ein bahnförmiges Element (2) aufweist, das zur Abdeckung einer Fläche bestimmt ist, die im wesentlichen mit einem Fenster (1.1) des mit einem transparenten Element allein oder in Verbindung mit anderen abgedeckten oder nicht abgedeckten Dachs übereinstimmt, und von einer Aufwickeltrommel (7) ausziehbar ist, die einen Rückzug bereitstellt, wobei dieses durch Zug mit einem Seil (8) ausziehbar ist, das an einem starren, seitlich geführten Frontstab (9) angreift und durch einen Getriebemotorsatz (3) angetrieben wird, der eine innere mit einem Gehäuse (3.2) abgedeckte Aufwickeltrommel (3.1) für das Seil (8) aufweist, **dadurch gekennzeichnet, dass** der Getriebemotorsatz (3) mit Begrenzungseinrichtungen des Vorschubs durch mechanischen Eingriff in mindestens einer Endstellung am Ende des Auszugs des bahnförmigen Elements (2) und/oder am Ende des Einzugs des bahnförmigen Elements (2) ausgestattet ist, wobei nach Erreichen dieser Begrenzung die durch diese Begrenzung erzeugten Spannungen nicht außerhalb des Getriebemotorsatzes (3) wirken.

2. Schattierungseinrichtung für Fahrzeugdächer nach Anspruch 1, **dadurch gekennzeichnet, dass** die Begrenzung des Endanschlags nach Einzug des bahnförmigen Elements (2) und entsprechend dem Auslauf des Seils (8) erfolgt.

3. Schattierungseinrichtung für Fahrzeugdächer nach Anspruch 2, **dadurch gekennzeichnet, dass** die Begrenzung der Endstellung mittels des durch den Austritt eines Stifts (3.1.2) aus der inneren Aufwickeltrommel (3.1) verursachten mechanischen Eingriff erreicht wird, der am Ende des Auslaufs des Seils (8) gegen das Gehäuse (3.2) freigegeben wird.

4. Schattierungseinrichtung für Fahrzeugdächer nach Anspruch 3, **dadurch gekennzeichnet, dass** der Stift (3.1.2) in einer Ausnehmung der inneren Aufwickeltrommel (3.1) des Seils (8) aufgenommen ist.

5. Schattierungseinrichtung für Fahrzeugdächer nach Anspruch 4, **dadurch gekennzeichnet, dass** die Ausnehmung in einer geneigten Stellung in Bezug auf die radiale Position der inneren Trommel (3) angeordnet ist.

6. Schattierungseinrichtung für Fahrzeugdächer nach Anspruch 3, **dadurch gekennzeichnet, dass** der Stift (3.1.2) mit einer inneren Feder (3.1.3) versehen ist, die ständig in Richtung aus ihrer Aufnahme heraus drückt.

7. Schattierungseinrichtung für Fahrzeugdächer nach Anspruch 3, **dadurch gekennzeichnet, dass** der mechanische Eingriff des Stifts (3.1.2) in die Ausnehmung (3.2) am Austrittsfenster (3.2.1) des Seils (8) erfolgt.

8. Schattierungseinrichtung für Fahrzeugdächer nach Anspruch 1, **dadurch gekennzeichnet, dass** die Begrenzung der Endstellung nach Auszug des bahnförmigen Elements (2) und dem entsprechenden Einzug des Seils (8) erfolgt.

9. Schattierungseinrichtung für Fahrzeugdächer nach Anspruch 8, **dadurch gekennzeichnet, dass** die Begrenzung der Endstellung durch Verminderung der Tiefe der Aufwickelnut (3.1.1) des Seils (8) in der Endstellung erreicht wird, um das Seil (8) gegen das Gehäuse (3.2) zu drücken und eine Bremswirkung durch Einklemmen zu erreichen.

10. Schattierungseinrichtung für Fahrzeugdächer nach Anspruch 8, **dadurch gekennzeichnet, dass** die Begrenzung der Endstellung durch Zusatz eines Anschlags (8.1) am Einlauf des Seils (8) zum Erreichen des mechanischen Eingriffs am Fenster (3.1.2) erzielt wird, das diesen auf Grund der geringeren Abmessungen am Eintritt hindert und so das Abbremsen der inneren Trommel (3.1) bewirkt.

11. Schattierungseinrichtung für Fahrzeugdächer nach Anspruch 10, **dadurch gekennzeichnet, dass** das Anschlagelement eine Kugel ist.

12. Schattierungseinrichtung für Fahrzeugdächer nach Anspruch 10, **dadurch gekennzeichnet, dass** die Umlenkungen (5) und die Elemente, durch die der Anschlag (8.1) läuft, so angepasst sind, dass sie dessen Durchtritt ermöglichen.

13. Schattierungseinrichtung für Fahrzeugdächer nach Anspruch 1, **dadurch gekennzeichnet, dass** die Begrenzung der Endstellung in beiden Vorschubrichtungen erfolgt: sowohl in Richtung des Auszugs wie auch des Einzugs des Schattierelements.

14. Schattierungseinrichtung für Fahrzeugdächer nach Anspruch 13, **dadurch gekennzeichnet, dass** das Gehäuse (3.2) mit einem inneren Spiralkanal (3.2.2) und die innere Trommel (3.1) mit einem Schlitz (3.1.5) in einer im wesentlichen radialen Ausführung ausgestattet ist, so dass ein Stift (3.1.4) gleichzeitig teilweise im Kanal (3.2.2) und in dem Schlitz (3.1.5) aufgenommen ist, so dass die relative Drehbewegung zwischen der Trommel (3.1) und dem Gehäuse (3.2) den Stift (3.1.4) an das Ende des Wegs entweder im Kanal (3.2.2) oder im Schlitz (3.1.4) bewegt, wodurch eine Begrenzung des Vorschubs erreicht wird.

15. Schattierungseinrichtung für Fahrzeugdächer nach Anspruch 14, **dadurch gekennzeichnet, dass** der innere Spiralkanal (3.2.2) eine konstante Steigung aufweist.

16. Schattierungseinrichtung für Fahrzeugdächer nach Anspruch 14, **dadurch gekennzeichnet, dass** der innere Spiralkanal (3.2.2) eine variable Steigung aufweist.

17. Schattierungseinrichtung für Fahrzeugdächer nach Anspruch 1, **dadurch gekennzeichnet, dass** das Fenster (1.1) mittels eines einzigen Vorhangs abgedeckt wird.

18. Schattierungseinrichtung für Fahrzeugdächer nach Anspruch 1, **dadurch gekennzeichnet, dass** das Fenster (1.1) mit zwei oder mehr gleichzeitig oder unabhängig voneinander bewegten Vorhängen abgedeckt wird.

19. Deckenverkleidungsmodul bestehend aus der Verkleidung (1), die eine Schattierungseinrichtung mit einer Einrichtung zur Vorschubbegrenzung nach einem beliebigen der vorhergehenden Ansprüche derart beinhaltet, dass das Schattierungselement direkt an der Verkleidung (1) angebracht ist.

## Revendications

1. Dispositif pare-soleil pour toits de véhicule qui comprend un élément en feuille (2) destiné à recouvrir une surface qui coïncide essentiellement avec une fenêtre (1.1) du toit recouvert ou pas recouvert par un élément transparent par lui-même ou en combinaison avec d'autres éléments, extensible à partir d'un tambour d'enroulement (7) qui fournit une tendance au ramassage, où il est extensible par traction au moyen du câble (8), agissant sur une tringle avant rigide (9) guidée latéralement et commandé par un ensemble motoréducteur (3) qui incorpore un tambour d'enroulement interne (3.1) du câble (8) recouvert par une gaine (3.2), **caractérisé en ce que** l'ensemble de motoréducteur (3) est équipé de dispositifs de limitation avec une interférence mécanique pour l'avancée dans au moins une butée, à l'extrémité de l'extension de l'élément en feuille (2) et/ou à l'extrémité du ramassage de l'élément en feuille (2), donc une fois que cette limitation a été atteinte, les sollicitations générées dans cette limitation non pas lieu en dehors de l'ensemble de motoréducteur (3).

2. Dispositif pare-soleil pour toits de véhicule selon la revendication 1, **caractérisé en ce que** la limitation de la butée s'établit après le ramassage de l'élément en feuille (2) et la sortie correspondante du câble (8).

3. Dispositif pare-soleil pour toits de véhicule selon la revendication 2, **caractérisé en ce que** la limitation de la butée est obtenue par l'interférence mécanique qui est causée par la sortie d'une broche (3.1.2) à partir du tambour d'enroulement interne (3.1) qui est libéré à l'extrémité de la sortie du câble contre la gaine (3.2).

4. Dispositif pare-soleil pour toits de véhicule selon la revendication 3, **caractérisé en ce que** la broche (3.1.2) est logée dans une cavité d'un tambour d'enroulement interne (3.1) du câble (8).

5. Dispositif pare-soleil pour toits de véhicule selon la revendication 4, **caractérisé en ce que** la cavité est aménagée dans une position inclinée par rapport à la position radiale du tambour interne (3.1)

6. Dispositif pare-soleil pour toits de véhicule selon la revendication 3, **caractérisé en ce que** la broche (3.1.2) est équipée d'un ressort interne (3.1.3) qui possède la tendance permanente à sortir de son logement.

7. Dispositif pare-soleil pour toits de véhicule selon la revendication 3, **caractérisé en ce que** l'interférence mécanique de la broche (3.1.2) avec la cavité (3.2) se produit dans la fenêtre de sortie (3.2.1) du câble (8).

8. Dispositif pare-soleil pour toits de véhicule selon la revendication 1, **caractérisé en ce que** la limitation de la butée est établie après l'extension de l'élément en feuille (2) et le ramassage correspondant du câble (8).

9. Dispositif pare-soleil pour toits de véhicule selon la revendication 8, **caractérisé en ce que** la limitation de la butée est obtenue en réduisant la profondeur de la rainure d'enroulement (3.1.1) du câble (8) dans l'étape finale pour obtenir la projection du câble (8) contre la gaine (3.2) et son emprisonnement pour obtenir un effet de freinage.

10. Dispositif pare-soleil pour toits de véhicule selon la revendication 8, **caractérisé en ce que** la limitation de la butée est obtenue par l'addition d'un arrêtoir (8.1) dans le câble d'entrée (8) pour obtenir l'interférence mécanique avec la fenêtre (3.1.2) qui l'empêche d'entrer grâce à ses dimensions plus petites et obtient ainsi le freinage du tambour interne (3.1).

11. Dispositif pare-soleil pour toits de véhicule selon la revendication 10, **caractérisée en ce que** l'élément arrêtoir (8.1) est une bille.

12. Dispositif pare-soleil pour toits de véhicule selon la revendication 10, **caractérisé en ce que** les redirecteurs (5) et les éléments à travers lesquels passe l'arrêtoir (8.1) ont été adaptés pour permettre son passage.

13. Dispositif pare-soleil pour toits de véhicule selon la revendication 1, **caractérisé en ce que** la limitation de la butée est établie dans les deux directions d'avancée : Aussi bien dans l'extension de l'élément pare-soleil que dans son ramassage.

14. Dispositif pare-soleil pour toits de véhicule selon la revendication 13, **caractérisé en ce que** la gaine (3.2) est équipée d'un canal spiral interne (3.2.2) et le tambour interne (3.2) avec une rainure (3.1.5) dans une disposition essentiellement radiale de manière à ce qu'une broche (3.1.4) se trouve partiellement logée simultanément dans le canal (3.2.2) et dans la rainure (3.1.5) de manière que le mouvement relatif de la rotation entre le tambour (3.1) et la gaine (3.2) déplace la broche (3.1.4) à l'extrémité de la voie d'acheminement ou le canal (3.2.2) ou la rainure (3.1.4) établissant une limite à l'avancée.

15. Dispositif pare-soleil pour toits de véhicule selon la revendication 14, **caractérisé en ce que** le canal spiral interne (3.2.2) est pourvu d'un passage constant.

16. Dispositif pare-soleil pour toits de véhicule selon la revendication 14, **caractérisé en ce que** le canal spiral interne (3.2.2) est pourvu d'un passage variable.

17. Dispositif pare-soleil pour toits de véhicule selon la revendication 1, **caractérisé en ce que** la fenêtre (1.1) est recouverte au moyen d'un simple rideau.

18. Dispositif pare-soleil pour toits de véhicule selon la revendication 1, **caractérisé en ce que** la fenêtre (1.1) est recouverte au moyen de deux ou plusieurs rideaux déplacés en même temps ou d'une manière indépendante.

19. Module de garniture de toit constitué par la garniture 1 qui incorpore un dispositif pare-soleil avec des dispositifs de limitation pour l'avancée selon l'une quelconque des revendications précédentes de manière que l'élément pare-soleil se trouve directement attaché à la garniture (1).
